Europäisches Patentamt

European Patent Office

Office européen des brevets

(19)

(11) Veröffentlichungsnummer: **0 498 956 A1**

(12) ## EUROPÄISCHE PATENTANMELDUNG

(21) Anmeldenummer: **91121225.6**

(22) Anmeldetag: **11.12.91**

(51) Int. Cl.5: **A47J 31/44**

(30) Priorität: **15.02.91 DE 4104652**

(43) Veröffentlichungstag der Anmeldung:
**19.08.92 Patentblatt 92/34**

(84) Benannte Vertragsstaaten:
**AT BE CH DE DK ES FR GB GR IT LI LU NL SE**

(71) Anmelder: **Melitta Haushaltsprodukte GmbH & Co. Kommanditgesellschaft**
**Ringstrasse 99**
**W-4950 Minden 1(DE)**

(72) Erfinder: **Salomon, Thomas**
**Kranichweg 5**
**W-4815 Schloss Holte(DE)**

(74) Vertreter: **Stracke, Alexander, Dipl.-Ing. et al**
**Patentanwälte Dipl.-Ing. Loesenbeck**
**Dipl.-Ing. Stracke Jöllenbecker Strasse 164**
**Postfach 10 18 82**
**W-4800 Bielefeld 1(DE)**

(54) **Kaffee- oder Teemaschine.**

(57) Diese Kaffee- oder Teemaschine hat einen Sockelbereich, bei dem in eine Sockelschale (1), mit einer Anschlußhülse (7) als senkrecht orientiertem Festlager, ein Durchlauferhitzer (10) eingefügt werden kann. Dieser wird von einer senkrecht zuzuführenden elektrischen Schaltplatine (21) gehalten, wobei sich seine Elektrik mit der Schaltplatine (21) verbindet. Die Schaltplatine (21) wird dabei mit der Sockelschale (1) verrastet. Schließlich wird in wiederum senkrechter Fügebewegung ein Boden (35) mit der Sockelschale (1) verrastet, der dabei zugleich die Verrastung zwischen Schaltplatine (21) und Sockelschale (1) blockiert. Die gesamte Elektrik der Maschine ist im Sockel untergebracht. Die Sockelschale (1) und der Boden (35) können im Bedarfsfall aus flammgeschütztem Kunststoff bestehen. Der Durchlauferhitzeranschluß könnte demgegenüber mittels eines physiologisch unbedenklichen Dichtelementes abgedichtet werden.

Fig. 1

EP 0 498 956 A1

Die Erfindung betrifft eine Kaffee- oder Teemaschine gemäß Oberbegriff des Patentanspruches 1. Bei einer derartigen bekannten Kaffee- oder Teemaschine (DE 39 04 378 A1) sind die Warmhalteplatte mit ihrer Dichtung, ein gesonderter Isolierring, der Durchlauferhitzer und eine Haltebrücke zu einer vorzumontierenden Baueinheit zusammengefaßt. Die Baueinheit selbst wird teils durch senkrecht orientierte Rastverbindungen, teils aber auch durch eine schwer automatisierbare Verhakung zusammengehalten. Die elektrische Verbindung des Durchlauferhitzers geschieht zwar über Steckverbindungen, die jedoch in verschiedene Richtungen orientiert sind, so daß im wesentlichen eine Verdrahtung von Hand zu erfolgen hat. Die vorgefertigte Baueinheit kann mit der Sockelschale über senkrecht orientierte Rastverbindungen verknüpft werden. Es sind jedoch zusätzliche Befestigungsschrauben vorgesehen. Zwar hat die Sockelschale senkrecht orientierte Anschlußhülsen. Der Durchlauferhitzer muß damit aber über gesonderte Rohr- oder Schlauchleitungsstücke verbunden werden, die über die Anschlußhülsen geschoben werden. Auch dieser Montagevorgang ist schwierig zu automatisieren. Da bei dieser Ausgestaltung das Wasser vom Frischwasserbehälter zum Durchlauferhitzer und von dort zum Brühkopf der Maschine die Innenwände der Anschlußhülsen berührt, müssen diese und damit die Sockelschale aus lebensmitteltauglichem Kunststoff bestehen. Die Verwendung flammgeschützter Kunststoffe, die aufgrund eben dieser Flammschutzzusätze physiologisch nicht unbedenklich sind, ist hier nicht möglich. Wollte man, wie in einigen Ländern gefordert, die Elektrik flammgeschützt unterbringen, würde dies mehrteilige komplizierte Sockelausgestaltungen erforderlich machen. Bei einer weiteren bekannten Kaffee- oder Teemaschine (DE 38 11 589 Cl) ist zur Beschaltung des Durchlauferhitzers eine Schaltplatine vorgesehen, die aus einem Träger aus Isolierstoff sowie einem Stanzgitter gebildet ist und Anschlüsse für ein Netzkabelstück sowie einen Maschinenschalter hat. Die elektrische Kontaktierung mit dem Durchlauferhitzer geschieht über Steckverbindungen. Die Steckverbindungen sind jedoch insgesamt horizontal in verschiedene Richtungen weisend orientiert, so daß insoweit eine Verdrahtung von Hand zu erfolgen hat. Auch wenn die Schaltplatine mit der Sockelschale über eine senkrecht orientierte Rastverbindung verrastet wird, erfolgt der eigentliche Zusammenhalt einschließlich der Verbindung des Sockelbodens mit der Sockelschale über einen Zapfen mit Schraubverbindung. Die Einlauf- und Auslaufseite des Durchlauferhitzers mit zulaufenden und abgehenden Rohrleitungselementen durch kleine flexible Schlauchstücke verknüpft, die im wesentlichen horizontal liegen. Insgesamt ist auch insoweit eine sinnvolle automatische Montage nicht möglich.

Der vorliegenden Erfindung liegt von daher die Aufgabe zugrunde, eine Kaffee- oder Teemaschine zu schaffen, die für eine vereinfachte automatische Montage besonders geeignet ist, erforderlichenfalls unter Berücksichtigung der Flammschutzproblematik.

Die erfindungsgemäße Lösung ergibt sich aus dem kennzeichnenden Teil des Patentanspruches 1.

Dank der dortigen Ausgestaltung ist eine vollautomatische Montage einschließlich elektrischer Kontaktierung des Durchlauferhitzers mit einer einfachen, senkrecht orientierten Fügebewegung, d. h. mit Hilfe eines sehr einfachen Montageautomaten, möglich. Die Sockelschale kann zunächst nach oben offen in die Montageanlage verbracht werden. Wesentlich ist, daß ihre Anschlußhülse für die automatische Montage der Teile zueinander und deren lagegerechte Zuführung einen Fix- und Orientierungspunkt bilden kann, und zwar umso mehr, als in einer ersten senkrechten Fügebewegung ein Dichtelement in ihr Inneres eingebracht wird, in das dann paßgerecht in einer weiteren senkrechten Fügebewegung der Durchlauferhitzer mit seinem senkrecht orientierten Einlaufstück in abgedichteter Form eingesteckt werden kann, wobei das in Frage stehende Dichtelement zugleich auch die Innenwandung der Anschlußhülse so verkleiden kann, daß hier eine Berührung mit dem Wasser nicht möglich ist. Die Anschlußhülse und damit die Sockelschale können also erforderlichenfalls auch aus flammgeschütztem Kunststoff bestehen. Die Sockelschale mit Anschlußhülse ist dabei ein fertigungsgenau herzustellendes Kunststoffteil. Auf der Anschlußhülse läßt sich später auch der zum Frischwassertank führende Stutzen problemlos montieren.

In die Sockelschale kann gegebenenfalls, wiederum mit senkrechter Fügebewegung, die vorzugsweise mit einer Dichtung umspritzte Warmhalteplatte eingerastet werden. In das Dichtelement kann dann wiederum in senkrechter Fügebewegung das Einlaufstück des Durchlauferhitzers eingesetzt werden, den man dabei an die Sockelschale bzw. gegebenenfalls die Warmhalteplatte anlegt.

Danach kann, wiederum in senkrechter Fügebewegung, die Schaltplatine eingebracht werden, die dabei mit der Sockelschale verrastet wird und die ihrerseits dazu dient, mechanisch den Durchlauferhitzer fest an die Sockelschale bzw. gegebenenfalls die Warmhalteplatte angedrückt zu halten. Wesentlich ist dabei, daß die Steckverbindungselemente der Schaltplatine ebenfalls in senkrechter Fügerichtung orientiert sind, ebenso diejenigen am Durchlauferhitzer, so daß mit eben dieser einen senkrechten Fügebewegung der Durchlauferhitzer nicht nur mechanisch festgelegt ist, sondern auch vollständig elektrisch kontaktiert ist.

Ein Netzkabelstück kann schon vorher mit der Schaltplatine verbunden sein, es kann aber auch jetzt in einer weiteren senkrecht orientierten Fügebewegung bei senkrecht orientierten Steckverbindungselementen mit der Schaltplatine verbunden werden. Ein Geräteschalter ist zweckmäßig bereits vorher mit der Schaltplatine steckverbunden.

Dank der senkrecht orientierten Rastverbindungen kann schließlich der Boden des Sockels mit der Sockelschale in senkrechter Fügebewegung verrastet werden.

Gemäß einer besonders bevorzugten Ausführungsform ist hier eine Ausgestaltung getroffen, durch die mit der Verrastung des Bodens an der Sockelschale die Rastverbindung zwischen der Schaltplatine und der Sockelschale in ihrer Raststellung blockiert wird.

Gemäß einer weiteren bevorzugten Ausgestaltung ist die stanzgitterförmige Schaltplatine mit einem Spanndraht verbunden, der in der Platine an Masse gelegt ist. Mit diesem Spanndraht kann man bei der Fügebewegung den Durchlauferhitzer beaufschlagen und ihn mit der vom Spanndraht gegebenen Vorspannung an der Sockelschale bzw. der Warmhalteplatte andrücken sowie gleichzeitig an Masse legen.

Aufgrund des geschilderten Aufbaus sind auch Wartungs- und Reparaturarbeiten einfach durchzuführen. Durch folgerichtige Lösung der Rastverbindungen und Entfernung der betroffenen Teile in umgekehrter Reihenfolge gelangt man problemlos an jede Schadenstelle. Im elektrischen Bereich sind dabei keinerlei Verdrahtungen zu lösen und nachfolgend wieder neu zu erstellen.

Nach Durchführung der vorstehend geschilderten einfachen Montageschritte im Bereich des Sokkels ist die gesamte Elektrik der Maschine funktionsfertig montiert. Man kann von daher in dieser Phase alle Kontrollarbeiten daran durchführen und erforderlichenfalls noch mit geringem Demontageaufwand Auswechslungen oder Reparaturen vornehmen. Auch Dichtigkeitsprüfungen im Bereich der Durchlauferhitzeranschlüsse sind bereits möglich.

Ein bevorzugtes Ausführungsbeispiel einer Kaffee- oder Teemaschine gemäß der Erfindung wird nachstehend unter Bezugnahme auf die beigefügte Zeichnung näher beschrieben.

Es zeigen:

Figur 1      den Sockelbereich einer Kaffee-oder Teemaschine gemäß der Erfindung in einer Längsschnittdarstellung,

Figur 2      den Sockelbereich nach Figur 1 in Draufsicht, unter überwiegender Wegbrechung des oberen Bereiches der Sockelschale, mit Draufsicht auf den Durchlauferhitzer,die Schaltplati

ne und sichtbare Teile des Sockelbodens.

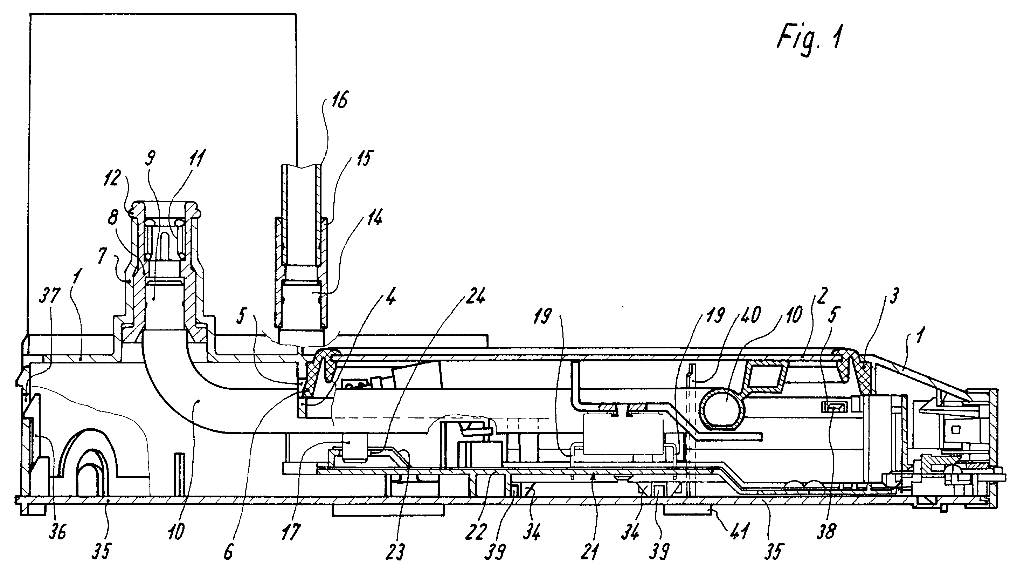

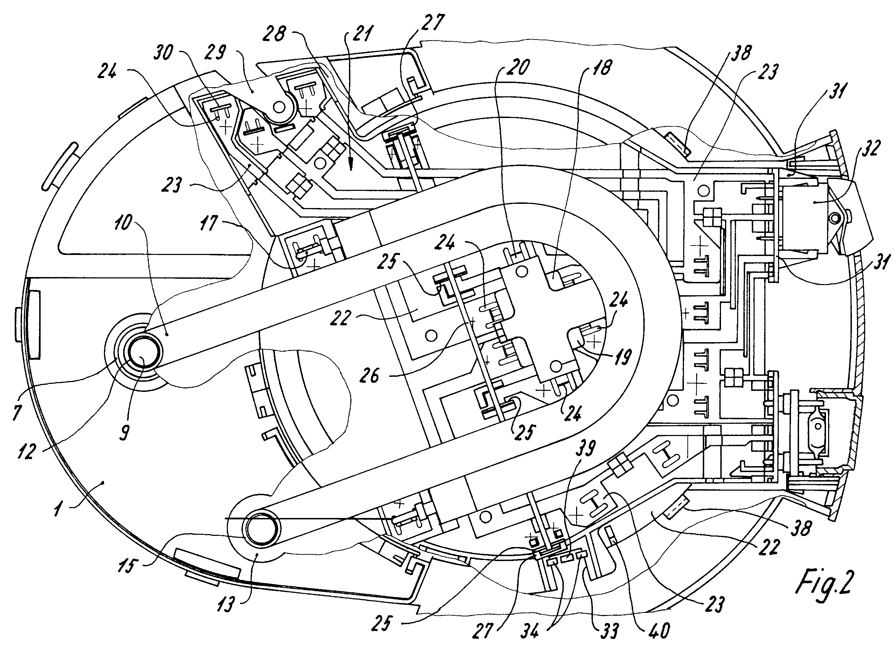

Die in den Figuren 1 und 2 dargestellte Kaffeeoder Teemaschine besitzt einen Sockel, der eine Sockelschale 1 aufweist, die aus Kunststoff besteht, wobei erforderlichenfalls ein flammgeschützter Kunststoff zum Einsatz kommt. Im dargestellten Ausführungsbeispiel ist in die Sockelschale 1 eine Warmhalteplatte 2 eingesetzt, die beispielsweise aus Aluminium bestehen kann. Auf die Warmhalteplatte 2 wird während des Brühvorganges die das Brühgetränk aufnehmende Kanne oder dergleichen aufgestellt. Bei anders gelagerten Konzepten, beipsielsweise bei Integration einer Warmhalteeinrichtung in den Boden der Kanne selbst, kann die Sockelschale in diesem Bereich durchgehen und hier dann lediglich eine Standfläche für die Kanne bilden. In zweckmäßiger Ausgestaltung ist die vorzugsweise kreisrunde Warmhalteplatte 2 mit einem umlaufenden Dichtungsprofil 3 umgeben, beispielsweise umspritzt, während an der Sockelschale 1 ein nach innen vorspringender Ring 4 gebildet ist, in den das Dichtungsprofil 3 einsetzbar ist. Die Ringwand 4 kann beispielsweise mit zahlreichen fensterartigen Durchbrechungen 5 versehen sein, von denen einige zur Verrastung mit dem Dichtungsprofil 3 benutzt werden, wozu an dem Dichtungsprofil 3 außen dann an entsprechender Stelle in die Durchbrechungen 5 eintretende Rastnoppen 6 vorgesehen sind. Die Anordnung ist so getroffen, daß bei umgedreht liegender, also dann nach oben offener Sockelschale 1, die Warmhalteplatte 2 mit dem Dichtungsprofil 3 in einer senkrechten Fügebewegung in der Sockelschale 1 festgesetzt werden kann.

Die Sockelschale 1 besitzt ferner eine in der Gebrauchslage senkrecht nach oben vorstehende Anschlußhülse 7, in die im dargestellten Ausführungsbeispiel ein hülsenartiges Dichtelement 8 aus einem physiologisch unbedenklichen Material, beispielsweise Silikon, eingesetzt ist. Dieses Dichtelement 8 nimmt in montiertem Zustand paßgenau ein senkrechtes Einlaufstück 9 des in dem Sockel anzuordnenden Durchlauferhitzers 10 der Maschine auf. Diese Anschlußhülse 7 dient bei der nachfolgend noch im einzelnen zu schildernden automatischen Montage des Maschinensockels und der in ihm aufzunehmenden Gesamtelektrik der Maschine als Festlager, an dem sich der gesamte Montagevorgang orientiert. Im dargestellten Ausführungsbeispiel ist in dem hülsenartigen Dichtelement 8 ferner eine Rückschlagventil 11 mit angeordnet, wie es üblicherweise zwischen dem Durchlauferhitzer und dem Frischwassertank der Maschine vorgesehen wird. Das Dichtelement 8 hat ferner, über die Anschlußhülse 7 nach oben und nach außen vorstehend, einen umlaufenden Dichtwulst 12, der in fertig montiertem Zustand der Maschine mit dem außen auf die Anschlußhülse 7 aufzusetzenden Anschlußstutzen des Wassertanks (nicht dargestellt) zusammenwirkt.

In der Sockelschale 1 befindet sich ferner eine Durchbrechung 13, durch die hindurch bei der Montage ein senkrechtes Auslaufstück 14 des Durchlauferhitzers 10 gesteckt wird. Der Durchlauferhitzer 10 hat somit vor seiner weiteren Festlegung noch einen kleinen Freiheitsgrad im Sinne einer Drehbarkeit in der das Festlager bildenden Anschlußhülse 7. Die zuletzt geschilderte Anordnung mit der Durchbrechung 13 kann in diesem Sinne als Loslager bezeichnet werden, wie es für den Montagevorgang im Hinblick auf auszugleichende Fertigungstoleranzen und dergleichen sinnvoll ist. Das Auslaufstück 14 kann mit einem als Dichtung wirkenden Anschlußstück 15, zweckmäßig wieder aus einem physiologisch unbedenklichen Material wie Silikon, bestückt sein, so daß hier später das zur Brüheinrichtung der Maschine führende Steigrohr 16 eingefügt werden kann.

Die Anschlußhülse 7 sowie das Dichtelement 8 und ferner dann der Durchlauferhitzer 10 mit den senkrechten Einlauf- und Auslaufstücken 9 und 14 haben im Verhältnis zueinander wieder eine einheitliche senkrechte Fügerichtung.

Zu seiner elektrischen Versorgung und Steuerung weist der Durchlauferhitzer 10 Versorgungsanschlüsse, Regleranschlüsse, Sicherungsanschlüsse sowie einen Masseanschluß auf, die insgesamt als Steckverbinderelemente ausgebildet sind. Für die Stromversorgung sind senkrecht orientierte Steckfahnen 17 an den beiden Enden des Heizrohres des Durchlauferhitzers 10 vorgesehen. Ferner sind Steckfahnen 18 für Sicherungszwecke, Steckfahnen 19 für den Regelkreis sowie Steckfahnen 20 für den Masseanschluß vorgesehen. Alle Steckfahnen sind senkrecht orientiert.

In der Sockelschale wird ferner eine elektrische Schaltplatine 21 angeordnet, die auf einem Kunststoffträger 22 ein elektrisches Stanzgitter 23 trägt. Das Stanzgitter 23 weist an entsprechenden Stellen diverse Kontaktschlitze 24 auf, die mit den Steckfahnen 17 bis 20 des Durchlauferhitzers zusammenwirken, so daß mit einer einzigen senkrechten Fügebewegung der Durchlauferhitzer 10 mit der elektrischen Schaltplatine 21, 22, 23 elektrisch verknüpft werden kann.

Das Stanzgitter 23 beinhaltet ferner senkrecht orientierte Steckfahnen 25, in die kontaktierend ein die Schaltplatine 21 überquerender Spanndraht 26 eingesetzt werden kann, der durch an dem Kunststoffträger 22 gebildete Anschläge 27 an einer Verlagerung gehindert wird. Der Spanndraht 26 ist über die Steckfahnen 25 in einer solchen Raumlage angeordnet, daß er bei der Montage unter eigener Vorspannung auf den Durchlauferhitzer 10 drückt und diesen im dargestellten Ausführungsbeispiel gegen die Unterseite der Warmhalteplatte 2 andrückt. Über den Spanndraht 26 und die Steckfahnen 25 kann der metallische Körper des Durchlauferhitzers 10 unmittelbar in seiner Gesamtheit an Masse gelegt werden.

An dem Kunststoffträger 22 der elektrischen Schaltplatine 21 ist ferner eine Aufnahme 28 für ein Netzkabelanschlußstück 29 gebildet. Letzteres ist wiederum mit senkrecht orientierten Steckfahnen 30 versehen, die in entsprechende Kontaktschlitze 24 des Stanzgitters 23 mit senkrechter Fügebewegung eingesetzt werden können.

Die elektrische Schaltplatine 21 besitzt ferner einen mechanisch/elektrischen Anschluß 31 für den Maschinenschalter 32. Da der Geräteschalter vor der Montage der Schaltplatine im Sockel mit letzterer vormontiert wird, ist insoweit eine senkrecht orientierte Fügerichtung nicht zwingend erforderlich.

Die in ihrer Außenkontur angenähert kreisabschnittförmig ausgebildete elektrische Schaltplatine 21 besitzt im Außenrandbereich des Kunststoffträgers 22 mehrere am Umfang verteilte Aussparungen 33, die der Festlegung an der Sockelschale 21 dienen. An entsprechender Stelle sind an der Unterseite des Ringes 4 der Sockelschale 1 von dort vorstehende Rasthakenpaare 34 ausgebildet. Die Rasthakenpaare 34 sind wieder senkrecht orientiert und können bei entsprechender Fügebewegung schnappend die seitlichen Außenwandbereiche der Aussaprungen 33 des Kunststoffträgers 22 der Schaltplatine 21 schnappend übergreifen. Die Rasthaken 34 eines Paares stehen abständig zueinander, bilden also einen Freiraum, dessen Bedeutung nachfolgend noch näher beschrieben wird.

Der Sockel weist ferner einen mit der Sockelschale 1 montierbaren Boden 35 auf, der erforderlichenfalls ebenfalls aus einem flammgeschützten Kunststoff besteht. Der Boden weist, an seinem Außenumfang verteilt, mehrere vorstehende Rasthaken 36 auf, für die an entsprechender Stelle an der Außenwand der Sockelschale 1 Rastdurchbrüche 37 vorgesehen sind. Ferner weist der Boden 35 emporstehende, weiter innen liegende Rasthaken 38 auf, die sich in einem Teil der eingangs genannten fensterartigen Durchbrechungen 5 des Ringes 4 der Sockelschale 1 verrasten können. Die Rasthaken 36 und 38 sind wieder in senkrechter Fügerichtung orientiert. Der Boden 35 besitzt ferner vorstehende Rippen 39, die so angeordnet sind, daß sie nach der Montage in die Freiräume zwischen jeweils zwei Rasthaken 34 treten können, die vom Ring 4 der Sockelschale 2 her mit den Aussparungen 33 im Kunststoffträger 22 der Schaltplatine verrastet sind. Diese Verrastung wird somit durch die vorstehenden Rippen 39 in der Raststellung zuverlässig blockiert.

Ferner sind an dem Boden 35 beispielsweise zwei einander abständig gegenüberliegende Stützrippen 40 vorgesehen, die soweit nach oben vorstehen, daß sie sich in montiertem Zustand gegen die Unterseite der Warmhalteplatte 2 oder, wie dargestellt, gegen deren Dichtungsprofil 3 legen. Etwaige über die Handhabung der Kanne von oben auf die Warmhalteplatte 2 ausgeübte mechanische Kräfte werden somit über die Stützrippen 40 unmittelbar auf den Boden 35 übetragen. Dieser hat zweckmäßig unterseitig kleine Standfüße 41, die direkt unter den innenseitigen Stützrippen 40 angeordnet sind.

Die automatisch durchführbare Montage der vorstehend geschilderten wesentlichen Elemente des Sockelbereiches der Maschine sei nachstehend im Zusammenhang kurz dargelegt: Die Sok-kelschale 1 wird umgedreht, also nach oben offen, mit der Anschlußhülse 7 als Festlager in der Mon-tagevorrichtung festgesetzt. In senkrechter Fügebe-wegung wird das hülsenförmige Dirchtelement 8 in die Anschlußhülse 7 eingesetzt. Dann wird in senkrechter Fügebewegung der Durchlauferhitzer 10 eingebracht, wobei sein senkrechtes Einlaufstück 9 in das Dichtelement 8 in der Anschlußhülse 7 eingefügt wird und sein senkrechtes Auslaufstück 14 die Durchbrechung 13 durchtritt. Darauf erfolgt, mit senkrechter Fügebewegung, die Einbringung der elektrischen Schaltplatine 21, die zuvor bereits mit dem Maschinenschalter 32 bestückt wurde. Eine vorherige Bestückung mit dem Spanndraht 26 ist ebenfalls möglich, obwohl hier auch so vorgegangen werden kann, daß der Spanndraht 26 auf den Durchlauferhitzer 10 aufgelegt wird und er bei der Fügebewegung der Schaltplatine dann in die Steckfahne 25 eintritt. Der Netzkabelanschluß 29 kann ebenfalls vormontiert sein, kann aber auch gesondert nach Einbringung der Schaltplatine noch in senkrechter Fügebewegung in diese eingefügt werden. Bei der senkrechten Fügebewegung durchdringen die Steckfahnen 17 bis 20 der Elektrik des Durchlauferhitzers 10 die entsprechenden Kontaktschlitze 24 des Stanzgitters 23 der Schaltplatine 21. Bei der hier beschriebenen Fügebewegung verrasten sich ferner die Rasthakenpaare 34 am Ring 4 der Sockelschale 1 in den Ausparungen 33 des Kunststoffträgers 22 der Schaltplatine 21. Nach diesem Fügevorgang ist die Schaltplatine mit der Sockelschale 1 verrastet und hält über den Spanndraht 26 den Durchlauferhitzer 10 lagegerecht an der Warmhalteplatte 2. Schließlich wird in senkrechter Fügebewegung der Boden 35 zugeführt, wobei seine Rasthaken 36 und 38 sich mit den entsprechenden Durchbrechungen in der Sok-kelschale 1 verrasten, die Stützrippen 40 sich unter das Dichtungsprofil 3 der Warmhalteplatte 2 legen und die vorstehenden Rippen 39 zwischen die Rasthaken der Rasthakenpaare 34 treten und diese in ihrer Verrastungslage an der Schaltplatine blok-

kieren.

**Patentansprüche**

1. Kaffee- oder Teemaschine mit einer Sockelschale (1) aus Kunststoff, in die gegebenenfalls eine Warmhalteplatte (2) eingesetzt ist und die eine senkrecht orientierte Anschlußhülse (7) aufweist, sowie mit einem Durchlauferhitzer (10), der gegen die Sockelschale (1) bzw. gegebenenfalls die Warmhalteplatte (2) gesetzt und gehalten ist und dessen Einlaufseite mit der Anschlußhülse (7) dicht verbunden ist, sowie mit einem Sockelboden (35), wobei zur mechanischen Verbindung zwischen den ge-nannten Teilen senkrecht orientierte Rastver-bindungen vorgesehen sind und die dem Durchlauferhitzer (10) zugeordneten elektri-schen Anschlüsse als Steckanschlüsse ausge-bildet sind, **dadurch gekennzeichnet**, daß die Sockelschale (1) erforderlichenfalls aus flammgeschütztem Kunststoff besteht und in ihrer Anschlußhülse (7) ein Dichtelement (8) eingesetzt ist, in das ein Einlaufstück (9) des Durchlauferhitzers (10) eingesteckt ist, mit der Sockelschale (1) gegebenenfalls mittels eines umlaufenden Dichtprofiles (3) die Warmhalteplatte (2) verrastet ist, der Durchlauferhitzer (10) an der Sockelschale (1) bzw. gegebenenfalls an der Warmhalteplatte (2) durch eine Schaltplatine (21), die Anschlüsse (28; 31) für ein Netzkabelstück (29) sowie einen Maschinenschalter (32) aufweist, gehalten ist, die mit der Sockelschale (1) verrastet ist und die mit dem Durchlauferhitzer (10) steckverbunden ist, wobei die Steckverbinderelemente (17 - 20, 24) in senkrechter Fügerichtung orientiert sind.

2. Kaffee- oder Teemaschine nach Anspruch 1, dadurch gekennzeichnet, daß das Dichtelement (8) einen äußeren umlaufenden Dichtwulst (12) aufweist, der mit dem auf die An-schlußhülse (7) aufzusetzenden Anschlußstut-zen für den Frischwassertank der Maschine zuwammenwirkt.

3. Kaffee- oder Teemaschine nach Anspruch 1 oder 2, dadurch gekennzeichnet, daß in dem Dichtelement (8) ein Rückschlagventil (11) angeordnet ist.

4. Kaffee- oder Teemaschine nach Anspruch 1, dadurch gekennzeichnet, daß die Schaltplatine (21) ein Stanzgitter (23) trägt, das kontaktgebende Steckaufnahmen (24) aufweist, die in senkrecht orientierte Steckfahnen (17 - 20) der Elektrik des Durchlauferhitzers (10) einsteckbar sind.

5. Kaffee- oder Teemaschine nach Anspruch 1 oder 4, dadurch gekennzeichnet, daß auf der Schaltplatine (21) ein Spanndraht (26) derart angeordnet ist, daß er unter Vorspannung den Durchlauferhitzer (10) an die Sockelschale (1) bzw. gegebenenfalls an die Warmhalteplatte (2) gedrückt hält.

6. Kaffee- oder Teemaschine nach Anspruch 5, dadurch gekennzeichnet, daß der Spanndraht (26) auf der Schaltplatine (21) an Masse gelegt ist.

7. Kaffee- oder Teemaschine nach einem der Ansprüche 1, 4 - 6, dadurch gekennzeichnet, daß die Schaltplatine (21) Kontaktschlitze (24) für an dem Netzkabelanschlußstück (29) in senkrechter Orientierung vorgesehene Steckfahnen (30) aufweist.

8. Kaffee- oder Teemaschine nach Anspruch 1, dadurch gekennzeichnet, daß an dem Boden (35) des Sockels emporstehende Rippen (39) vorgesehen sind, mit denen in montiertem Zustand die Rastverbindungen (33, 34) zwischen der Schaltplatine (21, 22) und der Sockelschale (1) blockiert sind.

9. Kaffee- oder Teemaschine nach Anspruch 1, dadurch gekennzeichnet, daß der Boden (34) des Sockels unter die Warmhalteplatte (2), gegebenenfalls deren Dichtprofil (3) greifende Stützrippen (40) aufweist.

10. Kaffee- oder Teemaschine nach Anspruch 9, dadurch gekennzeichnet, daß der Boden (35) außenseitig Standfüße (41) aufweist, die unter den innenseitigen Stützrippen (40) angeordnet sind.

11. Kaffee- oder Teemaschine nach Anspruch 1, dadurch gekennzeichnet, daß der Durchlauferhitzer (10) ein senkrecht orientiertes Auslaufstück (14) aufweist, das mit Spiel eine Durchbrechung (13) in der Sockelschale (1) durchtritt.

Fig. 1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 199 486 (SWAN HOUSEWARES LIMITED) * Seite 6, Zeile 5 - Seite 20, Zeile 25; Abbildungen 1-6 * --- | 1,3-7,11 | A47J31/44 |
| X | DE-A-3 904 376 (ROBERT KRUPPS & CO.) * Spalte 4, Zeile 13 - Spalte 8, Zeile 56; Abbildungen 1-7 * --- | 1-3,10, 11 | |
| D,X | DE-A-3 904 378 (ROBERT KRUPPS STIFUNG & CO.) * Spalte 5, Zeile 65 - Spalte 12, Zeile 46; Abbildungen 1-21 * --- | 1,8-11 | |
| D,A | DE-C-3 811 589 (BRAUN AG) * Spalte 6, Zeile 60 - Spalte 8, Zeile 54; Abbildungen 1-4 * ----- | 1,4,5,7 | |
| | | | **RECHERCHIERTE SACHGEBIETE (Int. Cl.5)** A47J |

Der vorliegende Recherchenbericht wurde für alle Patentansprüche erstellt

| Recherchenort | Abschlußdatum der Recherche | Prüfer |
|---|---|---|
| DEN HAAG | 25 MAI 1992 | ELSWORTH D. |